# EUROPÄISCHE PATENTANMELDUNG

(11) **EP 4 523 862 A1**
(43) Veröffentlichungstag der Anmeldung: **19.03.2025**
(21) Anmeldenummer: 24191722.8
(22) Anmeldetag: 30.07.2024
(51) Int. Cl.: B25J 9/00, B25J 9/06, B65G 21/08, B65H 31/30, B65G 61/00, B25J 9/16

(54) **VORRICHTUNG ZUM ABSETZEN VON STAPELN ÜBEREINANDERLIEGENDER DRUCKPRODUKTE**

(30) Priorität: 12.09.2023 EP 23196786
(71) Anmelder: Heidelberger Druckmaschinen AG, 69115 Heidelberg (DE)
(72) Erfinder: Dr. Neeb, Steffen, 64625 Bensheim (DE); Demir, Suat, 69190 Walldorf (DE); Östreicher, Michael, 69214 Eppelheim (DE); Leonhardt, Holger, 74909 Meckesheim (DE); Dr. Maier, Stefan, 69234 Dielheim (DE); März, Ralf, 74918 Angelbachtal (DE); Knöbl, Dominik, 74918 Angelbachtal (DE)

(57) **Zusammenfassung**

Eine erfindungsgemäße Vorrichtung zum Absetzen von Stapeln übereinanderliegender Druckprodukte, wobei die Absetzvorrichtung (1) eine Förderstrecke (3) für die Stapel (2) und einen Roboterarm (11) zum Aufnehmen der Stapel (2) von der Förderstrecke (3) und zum Absetzen der Stapel (2) auf Paletten (21) umfasst und wobei die Förderstrecke (3) einen vor Zugriff geschützten Bereich (30) umfasst, zeichnet sich dadurch aus, dass die Förderstrecke (3) in Förderrichtung (4a) hinsichtlich des Zugriffs in wenigstens drei aufeinander folgende Bereich gegliedert ist, nämlich einen geschützten Bereich (30), einen ungeschützten Bereich (31) und einen weiteren geschützten Bereich (32), und dass der Roboterarm (11) derart neben einer Längsseite (4c) der Förderstrecke (3) angeordnet ist, dass das Aufnehmen der Stapel (2) im ungeschützten Bereich (31) erfolgt. Die Erfindung ermöglicht es in vorteilhafter Weise, eine Absetzvorrichtung für den Bediener zugänglich zu gestalten und zudem flexibel einsetzen und positionieren zu können. Die Erfindung kommt z.B. in Druckereien oder Druckweiterverarbeitungsbetrieben zum Einsatz.

## Beschreibung

### Erfindung

Die Erfindung betrifft eine Vorrichtung zum Absetzen von Stapeln übereinanderliegender Druckprodukte mit den Merkmalen des Oberbegriffs von Anspruch 1 und ein System mit einer solchen Vorrichtung nach Anspruch 9.

### Gebiet der Technik

Die Erfindung liegt auf dem technischen Gebiet der grafischen Industrie und dort insbesondere im Bereich des Handhabens (z.B. Greifen, Halten, Bewegen, Drehen, Wenden und/oder Absetzen) von Stapeln aus übereinander liegenden, flexiblen und bevorzugt bedruckten und gefalzten flachen Produkten wie z.B. Falzbogen, bevorzugt aus Papier, Karton, Pappe, Kunststoff oder Verbundmaterial, mit einem Manipulator, insbesondere einem Gelenkarmroboter oder einem kollaborativen Robotersystem mit Roboterarm und Greifereinrichtung für die Stapel.

### Stand der Technik

Es ist im Bereich der Druckweiterverarbeitung (Postpress) bereits bekannt, Stapel von flächigen Produkten auf einer (z.B. Rollen-) Förderstrecke zu transportieren, die Stapel mittels eines an einem Roboterarm angeordneten Greifers zu erfassen, von der Förderstrecke abzuheben, zu einer Palette zu bewegen und dort abzusetzen.

Die DE202019106975U1 offenbart eine Förderstrecke für Stapel übereinanderliegender Druckprodukte und einen sogenannten kollaborativen Roboter mit einem Roboterarm samt Greifer zum Aufnehmen der Stapel von der Förderstrecke und zum Absetzen der Stapel auf Paletten. Der Roboter ist dabei am Ende der Förderstrecke angeordnet.

Die DE102020103398A1 offenbart ebenfalls eine Förderstrecke für Stapel übereinanderliegender Druckprodukte und einen Roboter mit einem Roboterarm samt Greifer zum Aufnehmen der Stapel von der Förderstrecke und zum Absetzen der Stapel auf Paletten. Der Roboter ist dabei ebenfalls am Ende der Förderstrecke angeordnet. Die Förderstrecke ist am Ende einer Falzmaschine angeordnet und kann - diesem Ende zugewandt - einen vor Zugriff geschützten Bereich umfassen.

Abseits der grafischen Industrie offenbart die US8468781 eine Förderstrecke für Produkte und zwei Roboter mit jeweiligem Roboterarm samt Greifer zum Aufnehmen der Produkte von der Förderstrecke und zum Absetzen der Produkte auf Paletten. Beide Roboter sind dabei neben der Förderstrecke angeordnet.

In Druckereien sind, wie in anderen Produktionsbetrieben auch, an den Produktionsmaschinen Sicherheitsanforderungen zu beachten. Die Maschinen sind daher hinsichtlich des Zugriffs durch einen Bediener wo erforderlich mit geschützten Bereichen versehen, z.B. mit Einhausungen oder Einzäunungen. Solche Maßnahmen können den Arbeitsablauf für den Bediener allerdings erschweren.

In Druckereien herrschen ferner, wie in anderen Produktionsbetrieben auch, oft sehr begrenzte Platzverhältnisse, weshalb die Positionierung neuer Maschinen oder die Umpositionierung bestehender Maschinen Probleme aufwerfen und die Flexibilität bei Produktionsänderungen mit sich ändernden Maschinenkonfigurationen einschränken kann.

### Technische Aufgabe

Es ist daher eine Aufgabe der vorliegenden Erfindung, eine Verbesserung gegenüber dem Stand der Technik zu schaffen, welche es insbesondere ermöglicht, eine Absetzvorrichtung für den Bediener zugänglich zu gestalten und zudem flexibel einsetzen und positionieren zu können.

### Erfindungsgemäße Lösung der Aufgabe

Diese Aufgabe wird erfindungsgemäß durch eine Vorrichtung nach Anspruch 1 oder ein System mit einer solchen Vorrichtung nach Anspruch 9 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Absetzen von Stapeln übereinanderliegender Druckprodukte (kurz: Absetzvorrichtung), wobei die Absetzvorrichtung eine Förderstrecke für die Stapel und einen Roboterarm zum Aufnehmen der Stapel von der Förderstrecke und zum Absetzen der Stapel auf Paletten umfasst und wobei die Förderstrecke einen vor Zugriff geschützten Bereich umfasst, zeichnet sich dadurch aus, dass die Förderstrecke in Förderrichtung hinsichtlich des Zugriffs in wenigstens drei aufeinander folgende Bereich gegliedert ist, nämlich einen geschützten Bereich, einen ungeschützten Bereich und einen weiteren geschützten Bereich, und dass der Roboterarm derart neben einer Längsseite der Förderstrecke angeordnet ist, dass das Aufnehmen der Stapel im ungeschützten Bereich erfolgt.

Ein erfindungsgemäßes System aus einer Maschine der grafischen Industrie und wenigstens einer erfindungsgemäßen Absetzvorrichtung zeichnet sich dadurch aus, dass die Maschine einen Ausgabeförderer für Stapel übereinanderliegender Druckprodukte umfasst, dass der geschützte Bereich oder der weitere geschützte Bereich der Förderstrecke der Absetzvorrichtung mit dem Ausgabeförderer fördertechnisch verbunden ist und dass die umkehrbare Förderrichtung so gewählt ist, dass der Roboterarm entweder auf der Seite der einen Längsseite oder auf der Seite der anderen Längsseite des Ausgabeförderers positioniert ist.

### Vorteilhafte Ausbildungen und Wirkungen der Erfindung

Die Erfindung ermöglicht es in vorteilhafter Weise, eine Absetzvorrichtung für den Bediener zugänglich zu gestalten und zudem flexibel einsetzen und positionieren zu können.

Die erfindungsgemäße Dreiteilung der Absetzvorrichtung (geschützter Bereich, ungeschützter Bereich zur Aufnahme der Stapel durch den Roboterarm, weiterer geschützter Bereich) in Kombination mit der erfindungsgemäßen Positionierung des Roboterarms auf einer der beiden Längsseiten des Ausgabeförderers, erlaubt es dem Bediener in vorteilhafter Weise, die Absetzvorrichtung flexibel einzusetzen und zu Positionieren und zugleich kann der Bediener auf den geschützten Bereich oder den weiteren geschützten Bereich von deren jeweiligem Ende her zugreifen, ohne in den Gefahrenbereich des seitlich positionierten Roboterarms zu gelangen. Darüber hinaus kann die Absetzvorrichtung flexibel an eine Maschine der grafischen Industrie, zum Beispiel eine Falzmaschine oder eine Bindemaschine, förderungstechnisch angekoppelt werden: mit ihrem geschützten Bereich oder mit ihrem weiteren geschützten Bereich. Kurz: die Absetzvorrichtung kann z.B. mit dem geschützten Bereich an eine Maschine angekoppelt sein, von dieser Maschine abgekoppelt werden, um eine vertikale Achse gedreht werden und mit dem weiteren geschützten Bereich ein eine andere Maschine angekoppelt werden. Dies erlaubt es dem Bediener insbesondere, die gegebenen Platzverhältnisse optimal auszunutzen. Die Förderstrecke und der Roboterarm können miteinander verbunden sein und auf diese Weise gemeinsam bewegt werden; alternativ werden diese beiden Einheiten separat bewegt.

Der Roboterarm ist bevorzugt Teil eines Robotersystems, welches meist auch eine Roboterbasis umfasst und welches als ein üblicher Industrieroboter samt Einzäunung zum Bedienerschutz, insbesondere als Gelenkarmroboter mit drei bis sieben Rotationsachsen, oder als ein sogenanntes kollaboratives Robotersystem, insbesondere als ein sogenannter Cobot, ausgebildet sein kann. Letzterer benötigt keine Einzäunung, da das System über eine eigene Sensorik verfügt und mittels dieser Berührungen mit Bedienpersonal erfasst und mögliche Verletzungen z.B. durch einen automatischen Stopp der Roboterarmbewegung verhindert. Ein kollaboratives Robotersystem kann alternativ zum Cobot auch durch einen Industrieroboter mit zusätzlichem Bereichsscanner (Erfassung von Bedienpersonal im Gefahrenbereich) und mit einer Stoppautomatik verwirklicht werden.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

### Weiterbildungen der Absetzvorrichtung

Eine Weiterbildung kann sich dadurch auszeichnen, dass der weitere geschützte Bereich als Pufferbereich dient, wobei solche Stapel in den Pufferbereich gefördert werden, welche nicht vom Roboterarm aufgenommen wurden. Der Pufferbereich ist dabei bevorzugt so gestaltet, dass ein Bediener Stapel aus dem Pufferbereich entnehmen kann. Eine Weiterbildung kann sich dadurch auszeichnen, dass ein im Pufferbereich befindlicher Stapel vom in Förderrichtung gelegenen Ende des Pufferbereichs her entnehmbar ist. Eine Weiterbildung kann sich dadurch auszeichnen, dass der Stapel händisch entnehmbar ist.

Eine Weiterbildung kann sich dadurch auszeichnen, dass eine Absetzposition neben einer Längsseite der Förderstrecke angeordnet ist. An der Absatzposition ist bevorzugt wenigstens eine Palette, bevorzugt zwei Paletten, angeordnet, auf der die Stapel einem vorgegebenen Absetzmuster entsprechend abgesetzt werden und dabei aufeinandergestapelt werden bilden.

Eine Weiterbildung kann sich dadurch auszeichnen, dass die Absetzvorrichtung wenigstens einen Antrieb, bevorzugt einen schaltbaren Elektromotor, für die Förderstrecke umfasst und dass die Förderrichtung im geschützten Bereich und eine weitere Förderrichtung im weiteren geschützten Bereich umkehrbar sind. Die Stapel auf der Förderstrecke können dann bevorzugt in die eine Richtung oder in die andere, entgegengesetzte Richtung der Förderstrecke bewegt werden. Dies ist insbesondere dann von Vorteil, wenn die Absetzvorrichtung wahlweise mit ihrem geschützten Bereich an eine erste Maschine der grafischen Industrie gekoppelt wird oder mit ihrem weiteren geschützten Bereich an eine zweite Maschine der grafischen Industrie gekoppelt wird.

Eine Weiterbildung kann sich dadurch auszeichnen, dass die Absetzvorrichtung zwei Antriebe für die Förderstrecke umfasst und dass die Förderrichtung im geschützten Bereich und eine weitere Förderrichtung im weiteren geschützten Bereich jeweils umkehrbar sind und/oder gegenläufig wählbar sind. Die gegenläufige Wahl der beiden Förderrichtungen ist insbesondere dann von Vorteil, wenn die Absetzvorrichtung zwischen zwei Maschinen der grafischen Industrie eingesetzt bzw. gleichzeitig (mit ihrem geschützten Bereich und mit ihrem weiteren geschützten Bereich) an zwei Maschinen gekoppelt wird.

Eine Weiterbildung kann sich dadurch auszeichnen, dass die Absetzvorrichtung wenigstens drei Antriebe für die Förderstrecke umfasst und dass die Förderrichtung im geschützten Bereich, eine weitere Förderrichtung im weiteren geschützten Bereich und eine weitere Förderrichtung im ungeschützten Bereich jeweils umkehrbar sind und/oder untereinander gegenläufig wählbar sind. Die Vorteile entsprechenden je nach Einsatz der Vorrichtung wenigstens einem der in den beiden vorhergehenden Absätzen genannten Vorteile.

Eine Weiterbildung kann sich dadurch auszeichnen, dass die Absetzvorrichtung fünf Antriebe für die Förderstrecke umfasst und dass die Förderrichtung im geschützten Bereich, eine weitere Förderrichtung im weiteren geschützten Bereich, eine weitere Förderrichtung im ungeschützten Bereich, eine weitere Förderrichtung eines (ungeschützten) ersten Zwischenbereichs und eine weitere Förderrichtung eines (ungeschützten) zweiten Zwischenbereichs jeweils umkehrbar sind und/oder untereinander gegenläufig wählbar sind. Dabei sind der erste Zwischenbereich zwischen dem geschützten Bereich und dem ungeschützten Bereich angeordnet und der zweite Zwischenbereich zwischen dem ungeschützten Bereich und dem weiteren geschützten Bereich angeordnet. Die beiden Zwischenbereiche sind bevorzugt ungeschützt, also ohne Einhausung, insbesondere Tunnel. Auch hier ergeben sind Vorteile wie im vorhergehenden Absatz. Die Zwischenbereiche können als Pufferbereiche genutzt werden, in denen Stapel gepuffert (temporär nicht transportiert) werden, z.B. weil vom jeweils anderen Ende der Vorrichtung her ein Stapel transportiert und in den ungeschützten Bereich eingeschleust wird.

Eine Weiterbildung kann sich dadurch auszeichnen, dass der geschützte Bereich und der weitere geschützte Bereich im Wesentlichen baugleich sind. Beide Bereiche können zum Beispiel eine zumindest seitliche oder tunnelartige Einhausung eines jeweiligen Abschnitts der Förderstrecke aufweisen.

### Weiterbildungen des Systems

Eine Weiterbildung kann sich dadurch auszeichnen, dass das System wenigstens zwei erfindungsgemäße Absetzvorrichtungen mit umkehrbarer Förderrichtung umfasst und dass die Absetzvorrichtungen hinsichtlich eines Förderns der Stapel aufeinander folgend angeordnet sind. Durch dieses Kaskadieren der Absetzvorrichtungen kann auch die Produktivität des Systems aus Maschine und Absetzvorrichtungen erhöht werden. Es kann zum Beispiel vorgesehen sein, dass die beiden Roboterarme abwechselnd die Stapel aus einem Strom von Stapeln ergreifen und auf Paletten absetzen.

Eine Weiterbildung kann sich dadurch auszeichnen, dass das System zwei erfindungsgemäße Absetzvorrichtungen mit umkehrbarer Förderrichtung nach Anspruch umfasst und dass die Roboterarme beider Absetzvorrichtungen bezüglich einer der Längsseiten des Ausgabeförderers auf derselben Seite angeordnet sind oder dass die Roboterarme beider Absetzvorrichtungen bezüglich einer der Längsseiten des Ausgabeförderers auf gegenüberliegenden Seiten angeordnet sind. Durch diese flexible Konfiguration der beiden Absetzvorrichtungen mit der Maschine der grafischen Industrie können gegebene Platzverhältnisse im Produktionsbetrieb optimal ausgenutzt werden.

Eine Weiterbildung kann sich dadurch auszeichnen, dass das System eine weitere Maschine der grafischen Industrie und eine gegenläufig wählbare Absetzvorrichtung umfasst und dass die Absetzvorrichtung hinsichtlich eines Förderns der Stapel zwischen den beiden Maschinen der grafischen Industrie angeordnet ist. Diese weitere flexible Konfiguration einer Absetzvorrichtung mit zwei Maschinen der grafischen Industrie erlaubt es, Produktionsmittel und damit Kosten einzusparen.

### Alternatives System

Es ist auch denkbar, anstelle der erfindungsgemäßen Vorrichtung (Förderstrecke und Roboterarm) nur den Roboterarm der Vorrichtung von einem Ort bei einer Maschine der grafischen Industrie mit vorhandener Förderstrecke zu einem anderen Ort bei einer anderen Maschine der grafischen Industrie mit ebenfalls vorhandener Förderstrecke zu bewegen und dort auf der einen oder der anderen Seite der bereits vorhandenen Förderstrecke zu positionieren.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren 1 bis 4 zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit teils weggelassen.

Figur 1 zeigt eine schematische Darstellung einer Draufsicht eines bevorzugten Ausführungsbeispiels einer erfindungsgemäßen Absetzvorrichtung.

Die Figuren 2 bis 4 zeigen jeweils eine schematische Darstellung einer Draufsicht eines bevorzugten Ausführungsbeispiels einer oder zweier erfindungsgemäßen Absetzvorrichtung/-en in vorteilhaften Konfigurationen.

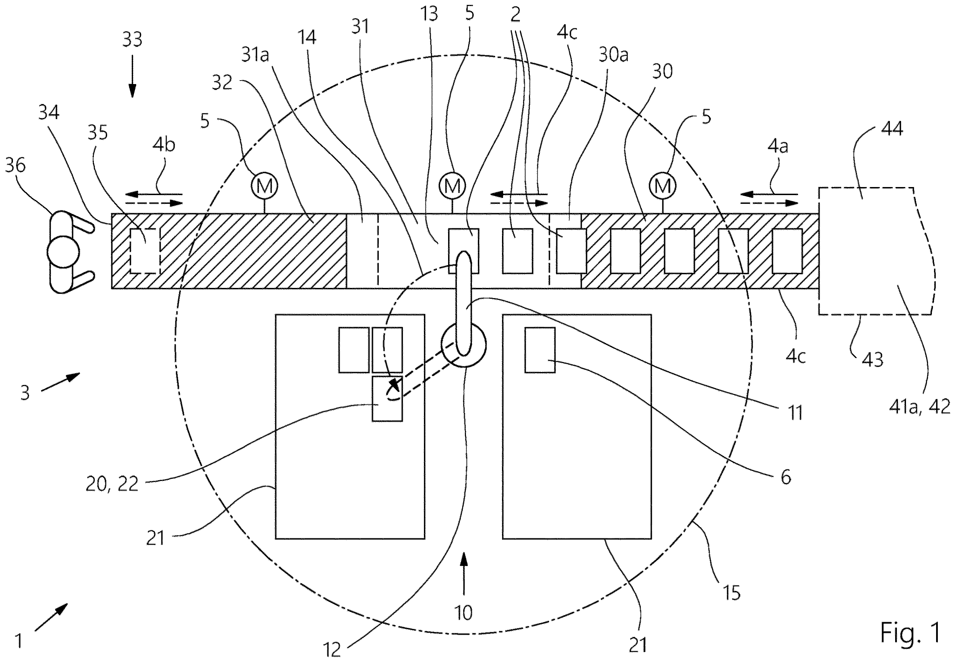

In Figur 1 ist eine Vorrichtung bzw. eine Absetzvorrichtung 1 dargestellt, welche Stapel 2 übereinanderliegender Druckprodukte fördert und (bevorzugt auf Paletten) absetzt. Die Vorrichtung 1 umfasst hierzu eine Förderstrecke 3, zum Beispiel einen Rollenförderer, welche die Stapel 2 in eine Förderrichtung 4a bewegt. Die Förderstrecke 3 weist eine Längsseite 4c auf. Für das Antreiben der Förderstrecke 3 umfasst die Vorrichtung wenigstens einen Antrieb 5, z.B. einen Elektromotor. Die Vorrichtung 1 ist mit ihrem einen Ende förderungstechnisch an eine vorgelagerte Produktionsmaschine 41a gekoppelt, welche die Stapel 2 produziert und bereitstellt.

Die Vorrichtung 1 umfasst einen Roboter 10 mit einem Roboterarm 11 und einer Roboterbasis 12. Der Roboter 10 ist bevorzugt ein kollaboratives Robotersystem und insbesondere ein kollaborativer Roboter. Die Roboterbasis ist neben der Längsseite 4c der Förderstrecke 3 positioniert, bevorzugt auf dem Boden. Ein nicht dargestellter Greifer am Roboterarm 11 ergreift jeweils einen Stapel 2 in einem Aufnahmebereich 13 der Förderstrecke 3, hebt den Stapel 2 von der Förderstrecke 3, führt eine Bewegung 14 aus und setzt den Stapel 2 an einer Absetzposition 20 und bevorzugt auf eine Palette 21 ab. Auf der Palette 21 können sich mehrere abgesetzte Stapel 22 befinden.

Der Roboterarm 11 kann mit seiner Bewegung 14 theoretisch jeden Ort im Gefahrenbereich 15 erreichen. Im Falle eines kollaborativen Robotersystems 10 ist es nicht erforderlich, den Gefahrenbereich 15 einzuzäunen; im Falle eines industriellen Gelenksarmroboters 10 wäre demgegenüber eine Einzäunung erforderlich, sofern keine Überwachungseinrichtung, z.B. ein Bereichsscanner, vorhanden ist.

Die Förderstrecke 3 ist bezüglich eines möglichen Zugriffs durch einen Bediener 36 dreigeteilt: es gibt einen (ersten) geschützten Bereich 30, darauffolgend einen (mittleren) ungeschützten Bereich 31 und wieder darauffolgend einen (zweiten) weiteren geschützten Bereich 32. Der jeweilige Schutz kann bevorzugt durch eine bereichsweise Einhausung der Förderstrecke 3 verwirklicht sein, z.B. einen Tunnel für die zu transportierenden Stapel 2. Der weitere geschützte Bereich 32 ist bevorzugt als ein Pufferbereich 33 ausgebildet. Dieser Pufferbereich 33 ist für den Bediener 36 von seinem Ende 34 her zugänglich, sodass der Bediener 36 einen gepufferter Stapel 35 händisch entnehmen kann. Ein gepufferter Stapel 35 ist dabei ein Stapel 2, welcher nicht vom Roboterarm 11 ergriffen und abgesetzt wurde, sondern auf der Förderstrecke 3 weiter transportiert wurde. Da der Bereich des möglichen Zugriffs durch den Bediener 36 außerhalb des Gefahrenbereichs 15 liegt, ist eine Gefährdung des Bediener 36 beim Zugriff auf gepufferte Stapel 35 ausgeschlossen. Da ebenso die Stelle, an welcher die Förderstrecke 3 an die vorhergelagerte Maschine 41a angekoppelt ist, außerhalb des Gefahrenbereichs 15 liegt, ist es dem Bediener 36 gefahrlos möglich, diese Stelle zu inspizieren oder dort arbeiten vorzunehmen. Der ungeschützte Bereich 31, in welchem der Roboterarm 11 die Stapel 2 ergreifen kann, liegt zentral bezüglich der Förderstrecke 3 und im Gefahrenbereich 15. Da der Bediener 36 den Gefahrenbereich 15 entweder nicht betritt oder, im Falle eines kollaborativen Robotersystems 10, diesen Bereich nur sehr aufmerksam betritt, kann eine Gefährdung des Bedieners 36 weitestgehend reduziert oder ausgeschlossen werden.

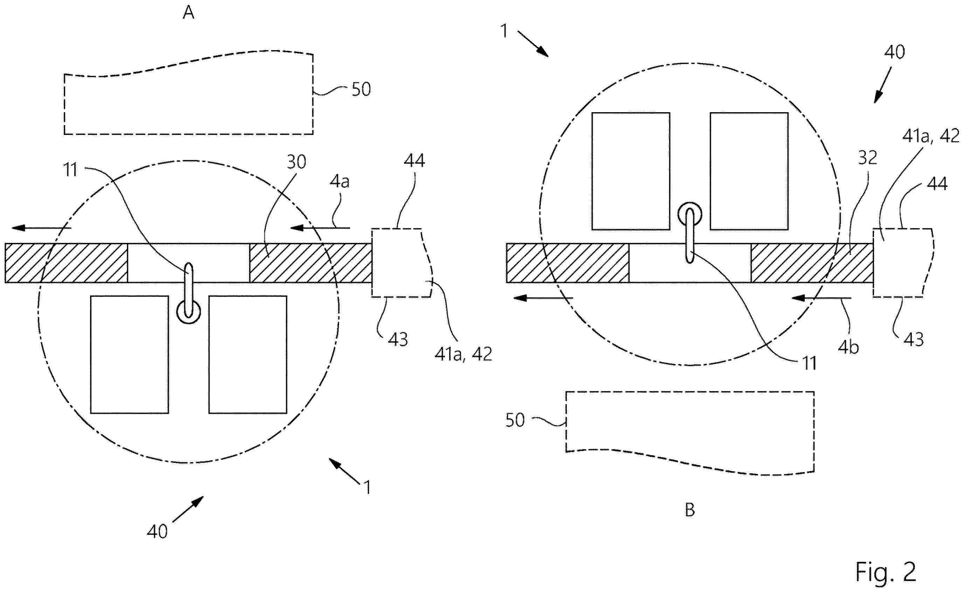

In Figur 2 sind zwei verschiedene Konfigurationen A und B dargestellt. In Konfiguration A ist die erfindungsgemäße Vorrichtung 1 derart an die vorgelagerte Maschine 41a bzw. an deren Ausgabeförderer 42 angekoppelt, dass der Roboterarm 11 auf der Seite der Längsseite 43 des Ausgabeförderers 42 angeordnet bzw. positioniert ist. In Konfiguration B ist die erfindungsgemäße Vorrichtung 1 demgegenüber derart an dieselbe vorgelagerte oder eine andere vorgelagerte Maschine 41a bzw. an den jeweiligen Ausgabeförderer 42 angekoppelt, dass der Roboterarm 11 auf der anderen Längsseite 44 des Ausgabeförderers 42 angeordnet bzw. positioniert ist. Ein Vergleich der beiden Konfigurationen A und B lässt erkennen, dass mit der Wahl der jeweiligen Konfiguration flexibel auf Platzverhältnisse reagiert werden kann, insbesondere kann die Positionierung z.B. einer anderen Maschine 50 berücksichtigt werden.

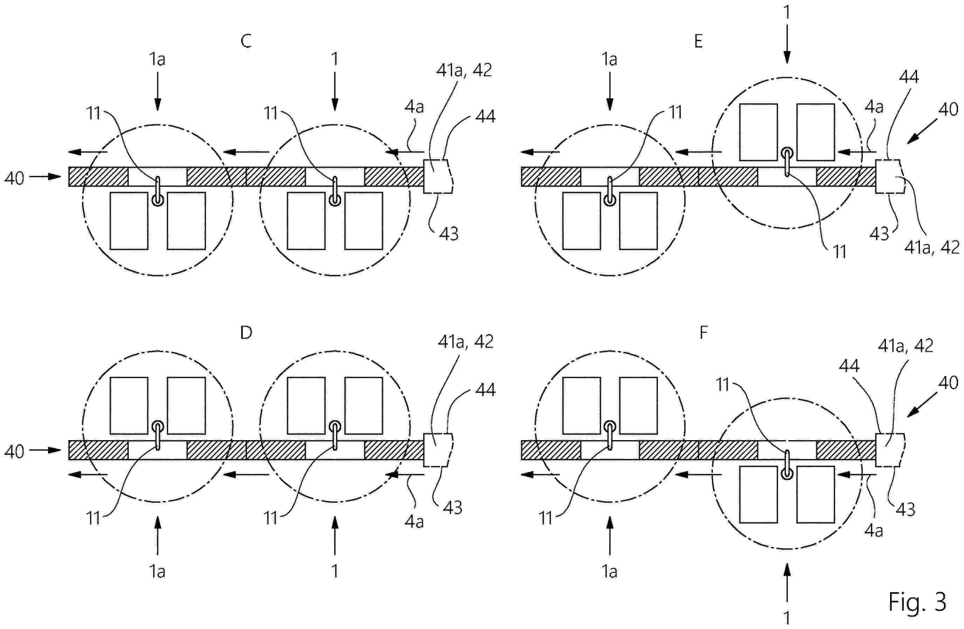

In Figur 3 sind vier weitere, verschiedene Konfigurationen C bis F dargestellt. Gemäß der dargestellten Konfigurationen sind jeweils zwei erfindungsgemäße Absetzvorrichtungen 1 und 1a vorhanden und als Kaskade an eine vorgelagerte Maschine 41a bzw. deren Ausgabeförderer 42 gekoppelt. Die beiden Roboterarme 11 sind in den Konfigurationen C und D jeweils auf derselben Seite bezüglich der Längsseite 43 oder der Längsseite 44 des Ausgabeförderers 42 angeordnet. In den Konfigurationen E und F sind die beiden Roboterarme 11 dagegen auf sich gegenüberliegenden Seiten bezüglich der Längsseite 43 oder der Längsseite 44 des Ausgabeförderers 42 angeordnet. Auch diese vier Konfigurationen erlauben es, beim Aufstellen der erfindungsgemäßen Vorrichtungen 1 und 1a flexibel auf Platzverhältnisse und Positionierung anderer Maschinen zu reagieren.

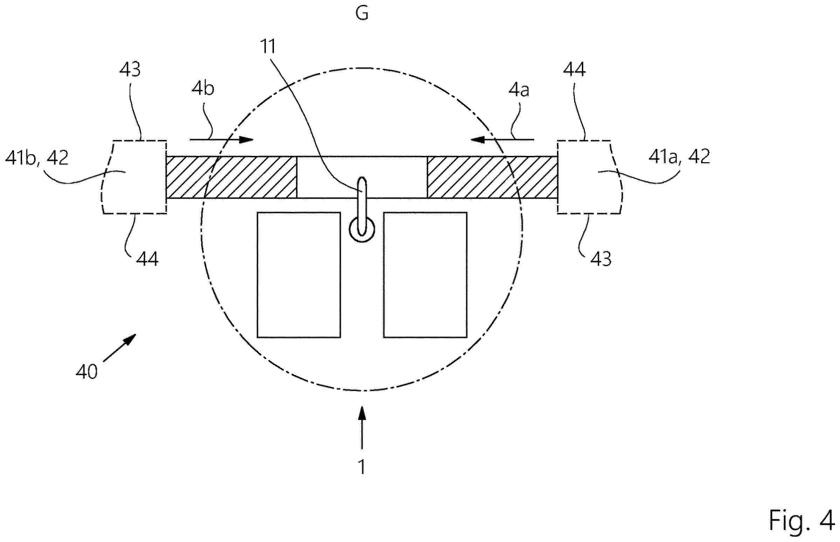

In Figur 4 ist eine weitere Konfiguration G dargestellt. Gemäß dieser Konfiguration sind zwei Maschinen der grafischen Industrie 41 a und 41 b vorhanden und zwischen diesen beiden Maschinen ist eine erfindungsgemäße Vorrichtung 1 positioniert. Die Förderrichtungen 4a und 4b sind dabei gegenläufig gewählt, so dass der Roboterarm 11 zentral die einlaufenden Stapel 2 beider Maschinen ergreifen und absetzen kann. Eine einzelne erfindungsgemäße Vorrichtung reicht bei dieser Konfiguration aus, den Ausstoß von zwei Maschinen zu handhaben.

### Bezugszeichenliste

- 1: Vorrichtung (Absetzvorrichtung)
- 1a: weitere Vorrichtung (Absetzvorrichtung)
- 2: Stapel
- 3: Förderstrecke
- 4a: Förderrichtung
- 4b: weitere Förderrichtung
- 4c: Längsseite
- 5: Antrieb/-e
- 10: Roboter
- 11: Roboterarm
- 12: Roboterbasis
- 13: Aufnahmebereich
- 14: Bewegung
- 15: Gefahrenbereich
- 20: Absetzposition/-en
- 21: Palette/-n
- 22: abgesetzte Stapel
- 30: geschützter Bereich
- 30a: erster Zwischenbereich
- 31: ungeschützter Bereich
- 31a: zweiter Zwischenbereich
- 32: weiterer geschützter Bereich
- 33: Pufferbereich
- 34: Ende des Pufferbereichs
- 35: gepufferter Stapel
- 36: Bediener
- 40: System
- 41a, b: Maschine/-n
- 42: Ausgabeförderer
- 43: Längsseite
- 44: andere Längsseite

- 50: andere Maschine
- A-G: Konfigurationen

## Patentansprüche

1. Vorrichtung zum Absetzen von Stapeln übereinanderliegender Druckprodukte, wobei die Absetzvorrichtung (1) eine Förderstrecke (3) für die Stapel (2) und einen Roboterarm (11) zum Aufnehmen der Stapel (2) von der Förderstrecke (3) und zum Absetzen der Stapel (2) auf Paletten (21) umfasst und wobei die Förderstrecke (3) einen vor Zugriff geschützten Bereich (30) umfasst,
**dadurch gekennzeichnet,**
**dass** die Förderstrecke (3) in Förderrichtung (4a) hinsichtlich des Zugriffs in wenigstens drei aufeinander folgende Bereich gegliedert ist, nämlich einen geschützten Bereich (30), einen ungeschützten Bereich (31) und einen weiteren geschützten Bereich (32), und dass der Roboterarm (11) derart neben einer Längsseite (4c) der Förderstrecke (3) angeordnet ist, dass das Aufnehmen der Stapel (2) im ungeschützten Bereich (31) erfolgt.

2. Vorrichtung nach Anspruch 1,
**dadurch gekennzeichnet,**
**dass** der weitere geschützte Bereich (32) als Pufferbereich (33) dient, wobei solche Stapel (2) in den Pufferbereich (33) gefördert werden, welche nicht vom Roboterarm (11) aufgenommen wurden.

3. Vorrichtung nach Anspruch 2,
**dadurch gekennzeichnet,**
**dass** ein im Pufferbereich (33) befindlicher Stapel 82) vom in Förderrichtung (4a) gelegenen Ende (34) des Pufferbereichs (33) her entnehmbar ist.

4. Vorrichtung nach Anspruch 3,
**dadurch gekennzeichnet,**
**dass** der Stapel (2) händisch entnehmbar ist.

5. Vorrichtung nach einem der vorhergehenden Ansprüche,
**dadurch gekennzeichnet,**
**dass** eine Absetzposition (20) neben einer Längsseite (4c) der Förderstrecke (3) angeordnet ist.

6. Vorrichtung einem der vorhergehenden Ansprüche,
**dadurch gekennzeichnet,**
**dass** die Absetzvorrichtung (1) wenigstens einen Antrieb (5) für die Förderstrecke (3) umfasst und dass die Förderrichtung (4a) im geschützten Bereich (30) und eine weitere Förderrichtung (4b) im weiteren geschützten Bereich (32) jeweils umkehrbar sind.

7. Vorrichtung einem der vorhergehenden Ansprüche,
**dadurch gekennzeichnet,**
**dass** die Absetzvorrichtung (1) wenigstens drei Antriebe (5) für die Förderstrecke (3) umfasst und dass die Förderrichtung (4a) im geschützten Bereich (30), eine weitere Förderrichtung (4b) im weiteren geschützten Bereich (32) und eine weitere Förderrichtung (4c) im ungeschützten Bereich (31) jeweils umkehrbar sind und/oder gegenläufig wählbar sind.

8. Vorrichtung nach einem der vorhergehenden Ansprüche,
**dadurch gekennzeichnet,**
**dass** der geschützte Bereich (30) und der weitere geschützte Bereich (32) im Wesentlichen baugleich sind.

9. System aus einer Maschine der grafischen Industrie und wenigstens einer Absetzvorrichtung nach Anspruch 6 oder Anspruch 7,
**dadurch gekennzeichnet,**
**dass** die Maschine (41a) einen Ausgabeförderer (42) für Stapel (2) übereinanderliegender Druckprodukte umfasst, dass der geschützte Bereich (30) oder der weitere geschützte Bereich (32) der Förderstrecke (3) der Absetzvorrichtung (1) mit dem Ausgabeförderer (42) fördertechnisch verbunden ist und dass die umkehrbare Förderrichtung (4a) so gewählt ist, dass der Roboterarm (11) entweder auf der Seite der einen Längsseite (43) oder auf der Seite der anderen Längsseite (44) des Ausgabeförderers (42) positioniert ist.

10. System nach Anspruch 9,
**dadurch gekennzeichnet,**
**dass** das System (40) wenigstens zwei Absetzvorrichtungen (1, 1a) nach Anspruch 6 umfasst und dass die Absetzvorrichtungen (1, 1a) hinsichtlich eines Förderns der Stapel (2) aufeinander folgend angeordnet sind.

11. System nach Anspruch 10,
**dadurch gekennzeichnet,**
**dass** das System (40) zwei Absetzvorrichtungen (1, 1a) nach Anspruch 6 umfasst und dass die Roboterarme (11) beider Absetzvorrichtungen (1, 1a) bezüglich einer der Längsseiten (43, 44) des Ausgabeförderers (42) auf derselben Seite angeordnet sind oder dass die Roboterarme (11) beider Absetzvorrichtungen (1, 1a) bezüglich einer der Längsseiten (43, 44) des Ausgabeförderers (42) auf gegenüberliegenden Seiten angeordnet sind.

12. System nach Anspruch 9,
**dadurch gekennzeichnet,**
**dass** das System (40) eine weitere Maschine der grafischen Industrie (41b) umfasst und dass die Absetzvorrichtung (1) hinsichtlich eines Förderns der Stapel (2) zwischen den beiden Maschinen der grafischen Industrie (41a, 41b) angeordnet ist.
